# EUROPEAN PATENT APPLICATION

(11) **EP 3 925 439 A1**
(43) Date of publication of application: **22.12.2021**
(21) Application number: 19914841.2
(22) Date of filing: 13.06.2019
(51) Int. Cl.: A01K 13/00, A61D 9/00

(54) **PROTECTIVE PATCH APPLICATION ASSISTANCE IMPLEMENT AND PROTECTIVE PATCH APPLICATION METHOD USING SAME**

(30) Priority: 15.02.2019 JP 2019025828
(71) Applicant: Tokuyama Corporation, Shunan-shi, Yamaguchi 745-8648 (JP)
(72) Inventor: USHIODA, Emi, Shunan-shi, Yamaguchi 745-8648 (JP); INUI, Yoji, Shunan-shi, Yamaguchi 745-8648 (JP); SHIRAI, Katsuhiro, Shunan-shi, Yamaguchi 745-8648 (JP); KONDO, Hitoshi, Shunan-shi, Yamaguchi 745-8648 (JP); YAMADA, Kie, Shunan-shi, Yamaguchi 745-8648 (JP)
(74) Representative: J A Kemp LLP
(86) International application number: PCT/JP2019/023400
(87) International publication number: WO 2020/166097

(57) **Abstract**

The present invention provides an application auxiliary tool that enables easy and quick application of a protective patch to a teat of a domestic animal, and a method of easily and quickly applying a protective patch to a teat of a domestic animal using the application auxiliary tool. An application auxiliary tool (2) for applying a protective patch (54) to a teat (64) of a domestic animal so as to protect a teat orifice (66) of the domestic animal includes: paired operation pieces (4a, 4b) that are rotatably connected to each other at their base ends (10a, 10b); and an elastic member (6) located between free ends (12a, 12b) of the paired operation pieces (4a, 4b).

## Description

### Technical Field:

The present invention relates to an application auxiliary tool for applying a protective patch to a teat of a domestic animal so as to protect a teat orifice of the domestic animal, and a method of applying a protective patch to a teat of a domestic animal using the application auxiliary tool.

### Background Art:

Patent Document 1 shown below discloses a protective patch to be applied to an area including a teat orifice of a domestic animal for preventing the domestic animal from being infected with mastitis. The protective patch includes an elastic sheet, an adhesive layer laminated on one side of the elastic sheet, and a protective sheet peelably laminated on the other side of the elastic sheet. The adhesive sheet is usually covered with release paper. Such a protective patch may be applied to a teat of a domestic animal in the following manner. Initially, the release paper is peeled off halfway from the adhesive layer, and the exposed part of the adhesive layer is applied to one side surface of the teat. Then, the release paper is peeled off completely from the adhesive layer, and the newly exposed part of the adhesive layer is applied to the other side surface of the teat. Afterwards, a user places his/her hand over the entire protective patch and clasps the teat, so that the protective patch is entirely applied to the teat, followed by peeling off the protective sheet from the elastic sheet.

Prior Art Documents: Patent Documents:

Patent Document 1: WO 2017/150203 A1

### Summary of the Invention:

### Problems to be solved by the invention:

However, since the elastic sheet is thin and extremely flexible, and the adhesive layer has good adhesion, for example, it is not always easy and is relatively troublesome to apply the protective patch as mentioned above to a teat of a domestic animal as required in the above-described manner, for example.

The present invention has been made in view of the aforementioned fact, and a main technical object thereof is to provide an application auxiliary tool that enables easy and quick application of the protective patch as mentioned above to a teat of a domestic animal.

Another technical object of the preset invention is to provide a method of easily and quickly applying the protective patch as mentioned above to a teat of a domestic animal using the application auxiliary tool.

### Means for solving the problems:

In order to achieve the aforementioned main technical object, one aspect of the present invention provides an application auxiliary tool for applying a protective patch to a teat of a domestic animal so as to protect a teat orifice of the domestic animal.

The application auxiliary tool includes: paired operation pieces that are rotatably connected to each other at their base ends; and an elastic member located between free ends of the paired operation pieces.

Preferably, each of the paired operation pieces includes an opening rotation angle limiter that limits an opening rotation angle between the paired operation pieces to a predetermined angle, and the elastic member is maintained to form a concave shape in such a manner that its intermediate part sinks toward the base ends of the paired operation pieces. It is favorable that one end of the elastic member is detachably connected to one of the free ends of the paired operation pieces, while the other end of the elastic member is detachably connected to the other of the free ends of the paired operation pieces. It is preferable that each of the free ends of the paired operation pieces has a predetermined width that corresponds to a width of the protective patch, and the elastic member includes: a one-side elongated strip-like piece that extends between the paired operation pieces on one side in a width direction; and an other-side elongated strip-like piece that extends between the paired operation pieces on the other side in the width direction. It is favorable that the elastic member includes a connecting elongated strip-like piece that is formed integrally to connect an intermediate part of the one-side elongated strip-like piece in a longitudinal direction with an intermediate part of the other-side elongated strip-like piece in the longitudinal direction. Preferably, one end of the connecting elongated strip-like piece of the elastic member extends beyond the one-side elongated strip-like piece in the width direction, while the other end extends beyond the other-side elongated strip-like piece in the width direction, and at the one end and the other end of the connecting elongated strip-like piece, displacement prevention projections are formed to prevent the protective patch to be placed on the elastic member from being displaced in the width direction. It is favorable that at both ends of the one-side elongated strip-like piece and both ends of the other-side elongated strip-like piece of the elastic member, projections to be locked are formed to protrude on both sides in the width direction, and in the free ends of the paired operation pieces, locking recessed portions are formed to detachably receive the respective projections to be locked. It is desirable that in a central part of each of the projections to be locked in the width direction, an additional projection is formed to protrude in the longitudinal direction, and in a central part of each of the locking recessed portions in the width direction, a hole is formed to allow the additional projection to be inserted therein. It is preferable that each of the paired operation pieces includes a width direction limiter that prevents the paired operation pieces from being displaced from each other in the width direction. It is favorable that in a central part in the width direction of each of the free ends of the paired operation pieces, a recessed portion with an inverted truncated cone shape is formed to extend in the longitudinal direction. It is desirable that on an outer surface of each of the free ends of the paired operation pieces, a ridge is provided to extend in the longitudinal direction through a center in the width direction. It is preferable that on both sides in the width direction of an inner surface of each of the free ends of the paired operation pieces, restriction projections are provided to prevent the protective patch to be placed on the elastic member from being displaced in the width direction and protruding from each of the free ends. It is favorable that each of the paired operation pieces is formed of a synthetic resin, particularly a transparent or semitransparent synthetic resin, and the elastic member is formed of a synthetic resin sheet.

In order to achieve the aforementioned other technical object, another aspect of the present invention provides a protective patch application method of applying a protective patch for protecting a teat orifice of a domestic animal to a teat of the domestic animal, the protective patch including: an elastic sheet; an adhesive layer laminated on one side of the elastic sheet; and a protective sheet peelably laminated on the other side of the elastic sheet.

The method includes:
preparing the application auxiliary tool of the aforementioned embodiment;
placing the protective patch on the elastic member of the application auxiliary tool with the adhesive layer directed upward;
applying at least a part of the protective patch around the teat of the domestic animal by pressing a central part of the protective patch placed on the elastic member against a tip of the teat of the domestic animal and rotating the respective operation pieces in a direction in which the free ends get close to each other against an elastic biasing action of the elastic member;
separating the application auxiliary tool from the protective patch applied to the teat of the domestic animal while rotating the respective operation pieces in a direction in which the free ends are separated from each other due to the elastic biasing action of the elastic member; and
peeling off the protective sheet of the protective patch applied to the teat of the domestic animal from the elastic sheet.

### Effects of the invention:

The protective patch application method of the present invention using the application auxiliary tool of the present invention makes it possible to easily and quickly apply a protective patch to an area including a teat orifice of a domestic animal as required.

### Brief Description of the Drawings:

[Fig. 1]: a perspective view illustrating a preferred embodiment of an application auxiliary tool constructed in accordance with the present invention;
[Fig. 2]: a perspective view of the application auxiliary tool illustrated in Fig. 1 when viewed from another direction;
[Fig. 3]: a plan view illustrating one of paired operation pieces of the application auxiliary tool illustrated in Fig. 1;
[Fig. 4]: a plan view illustrating the other of the paired operation pieces of the application auxiliary tool illustrated in Fig. 1;
[Fig. 5]: an exploded perspective view illustrating a fastener for connecting the paired operation pieces of the application auxiliary tool illustrated in Fig. 1;
[Fig. 6]: a plan view illustrating an elastic member of the application auxiliary tool illustrated in Fig. 1;
[Fig. 7]: a perspective view illustrating a typical example of a protective patch;
[Fig. 8]: a cross-sectional view of the protective patch illustrated in Fig. 7;
[Fig. 9]: a perspective view illustrating a placement step in a method of applying a protective patch to a teat orifice of a domestic animal using the application auxiliary tool illustrated in Fig. 1;
[Fig. 10]: a perspective view illustrating an application step in the method of applying a protective patch to a teat orifice of a domestic animal using the application auxiliary tool illustrated in Fig. 1;
[Fig. 11]: a perspective view illustrating an application auxiliary tool separation step in the method of applying a protective patch to a teat orifice of a domestic animal using the application auxiliary tool illustrated in Fig. 1; and
[Fig. 12]: a perspective view illustrating a protective sheet peeling-off step in the method of applying a protective patch to a teat orifice of a domestic animal using the application auxiliary tool illustrated in Fig. 1.

### Mode for Carrying Out the Invention:

Hereinafter, a preferred embodiment of an application auxiliary tool of the present invention will be described in detail with reference to the attached drawings. Further, a detailed description will be given of a preferred embodiment of a protective patch application method of the present invention for applying a protective patch to a teat of a domestic animal using the aforementioned preferred embodiment.

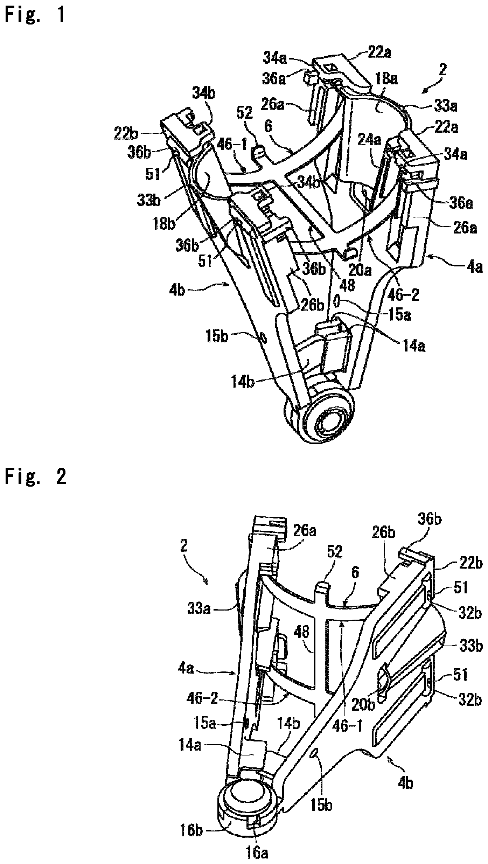

Figs. 1 and 2 illustrate a preferred embodiment of an application auxiliary tool constructed in accordance with the present invention. An application auxiliary tool denoted by reference numeral 2 includes paired operation pieces 4a and 4b, and an elastic member 6.

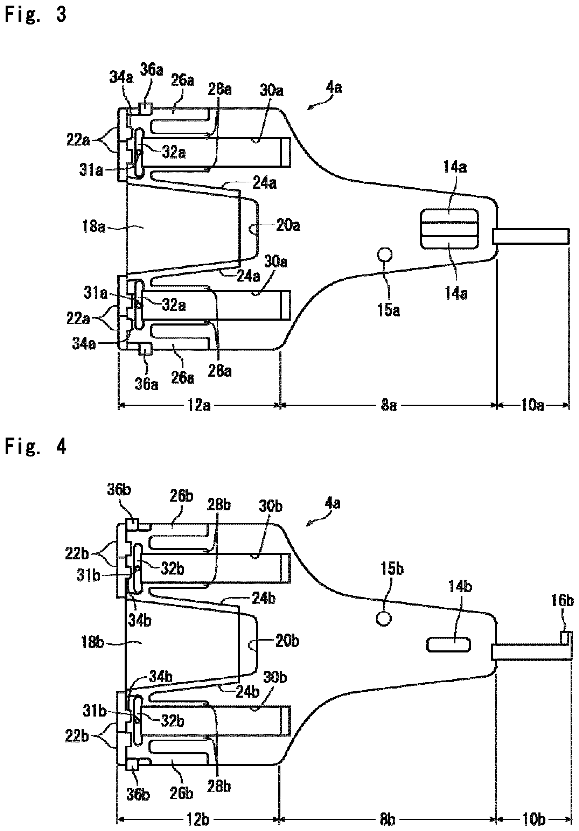

There is no particular limitation on the material of the paired operation pieces 4a and 4b, and they may be formed of a piece of wood, paper, a metal, a synthetic resin or the like. However, it is preferable to use a synthetic resin because the paired operation pieces can be formed easily by injection molding, 3D printing molding or the like. Particularly suitable examples of the synthetic resin include a polyolefin resin, a vinyl chloride resin, a polyester resin, a nylon resin, and an ABS (acrylonitrile butadiene styrene) resin. Further, it is desirable that the paired operation pieces 4a and 4b are transparent or semitransparent from the viewpoint of handleability at the time of conducting a protective patch application method to be described later. The following description is given with reference to Fig. 3 and 4 as well as Figs. 1 and 2. The paired operation pieces 4a and 4b respectively include intermediate portions 8a and 8b, base ends 10a and 10b that protrude from the lower ends of the intermediate portions 8a and 8b, and free ends 12a and 12b that extend upward from the upper ends of the intermediate portions 8a and 8b. In the embodiment illustrated, each of the intermediate portions 8a and 8b of the paired operation pieces 4a and 4b has a flat plate structure with an inverted truncated cone shape including a lower part and an upper part, both side edges of which extend outward in the width direction in an arc-like manner. On a lower inner surface (i.e., the surface illustrated in Fig. 3) of the intermediate portion 8a of the operation piece 4a, paired protruding walls 14a are formed to be spaced apart from each other in the width direction. On a lower inner surface (i.e., the surface illustrated in Fig. 4) of the intermediate portion 8b of the operation piece 4b, a single protruding wall 14b is formed. As will be described later, the protruding walls 14a in combination with the protruding wall 14b constitute a width direction displacement limiter that prevents the connected paired operation pieces 4a and 4b from being displaced from each other in the width direction. At corresponding sites in the intermediate portions 8a and 8b of the paired operation pieces 4a and 4b, circular holes 15a and 15b are formed respectively for allowing a suitable strap (not illustrated) to be inserted thereinto. The base ends 10a and 10b protrude in a direction perpendicular to a direction in which the intermediate portions 8a and 8b extend. Each of the base ends 10a and 10b protrudes at a position displaced to one side (i.e., the lower side in Fig. 3 or 4) from the center of the intermediate portion 8a or 8b in the width direction (i.e., the vertical direction in Fig. 3 or 4). When connected as illustrated in Figs. 1 and 2, the base ends 10a and 10b overlap each other. (The form of interconnection between the base ends 10a and 10b will be described later.) Each of the base ends 10a and 10b has a ring shape. The base end 10a has an arc-shaped cutout 16a, while the base end 10b has an arc-shaped projection 16b. The length of the cutout 16a is larger than that of the projection 16b by a predetermined amount. The opening rotation angle between the operation pieces 4a and 4b is limited to an angle that is formed when the projection 16b is located to abut one end of the cutout 16a. (The cutout 16a and the projection 16b constitute an opening rotation angle limiter.) In the embodiment illustrated, the minimum angle to be formed between the operation pieces 4a and 4b is defined by the projection 16b abutting the other end of the cutout 16a.

Each of the free ends 12a and 12b of the paired operation pieces 4a and 4b has a substantially rectangular shape, and its dimension in the width direction is set to correspond to or, more specifically, be somewhat larger than the width of a protective patch to be described later. In the central parts of the free ends 12a and 12b in the width direction, recessed portions 18a and 18b, each having an inverted truncated cone shape, are formed respectively. Directly below the recessed portions 18a and 18b, rectangular openings 20a and 20b are formed respectively. On either side of the recessed portions 18a and 18b, upstanding walls 22a and 22b that extend along the free ends, upstanding walls 24a and 24b that extend along the recessed portions 18a and 18b, and upstanding walls 26a and 26b that extend along the edges are formed respectively on the inner surfaces (i.e., the surfaces illustrated in Figs. 3 and 4) of the free ends 12a and 12b. Further, on the inner surfaces of the free ends 12a and 12b, paired upstanding restriction walls 28a and 28b are formed between the upstanding walls 24a and 24b and the upstanding walls 26a and 26b, respectively, to extend in parallel with each other. Between the paired upstanding restriction walls 28a and 28b, rectangular recessed portions 30a and 30b are formed respectively to extend in an elongated manner in the vertical direction (i.e., the horizontal direction in Figs. 3 and 4) on the inner surfaces of the free ends 12a and 12b. Further, elongated locking recessed portions 32a and 32b are formed on the upper ends of the rectangular recessed portions 30a and 30b, respectively, to extend to both sides in the width direction. In the central parts of the locking recessed portions 32a and 32b in the width direction, holes 31a and 31b are formed respectively. As can be understood from Figs. 1 and 2, on the outer surfaces of the free ends 12a and 12b, protruding portions that correspond to the recessed portions 18a and 18b are present. At the centers of the protruding portions in the width direction, i.e., the centers of the free ends 12a and 12b in the width direction, ridges 33a and 33b are formed respectively to extend linearly in the longitudinal direction (i.e., the horizontal direction in Figs. 3 and 4), as can be clearly understood with reference to Fig. 2. Restriction projections 34a and 34b are formed on the upstanding walls 22a and 22b, respectively, while restriction projections 36a and 36b are formed on the upstanding walls 26a and 26b, respectively.

The operation pieces 4a and 4b as described above are plane-symmetrical to each other except for the arrangement of the protruding walls 14a and 14b formed on the lower inner surfaces of the intermediate portions 8a and 8b, and the shapes of the base ends 10a and 10b and the upstanding walls 22a and 22b of the free ends 12a and 12b.

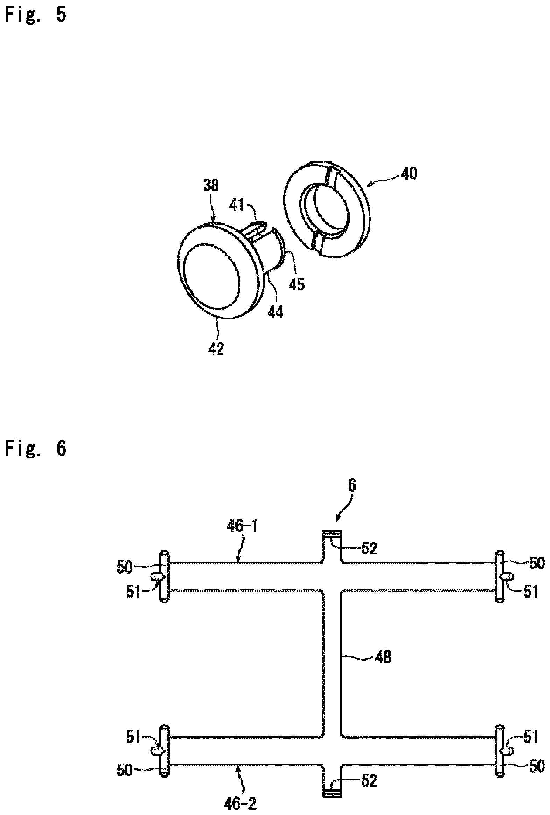

Fig. 5 illustrates connecting tools 38 and 40 for connecting the base end 10a of the operation piece 4a with the base end 10b of the operation piece 4b so that they are rotatable with respect to each other. The connecting tools 38 and 40 can be formed of an appropriate synthetic resin such as polyoxymethylene or polyolefin like polypropylene and polyethylene. The connecting tool 38 includes a substantially disc-shaped head 42 and a substantially cylindrical shaft 44. The shaft 44 includes a pair of slits 41 that are formed at an interval of 180° to extend in the longitudinal direction, and a flange 45 that is formed at the end of the shaft 44 to protrude outward in the radial direction. The connecting tool 40 has a ring shape. As can be understood with reference to Figs. 1 and 2, the shaft 44 of the connecting tool 38 is inserted into the base end 10a of the operation piece 4a and the base end 10b of the operation piece 4b, and the connecting tool 40 is fitted with the protruding end of the shaft 44 of the connecting tool 38, whereby the base end 10a of the operation piece 4a and the base end 10b of the operation piece 4b are rotatably mounted on each other. The flange 45 formed at the end of the shaft 44 protrudes beyond the connecting tool 40, so that the shaft 44 of the connecting tool 38 is locked in a state of being inserted into the connecting tool 40. It is favorable that the inner diameter of each of the base ends 10a and 10b, the outer diameter of the shaft 44 of the connecting tool 38, and the inner diameter of the connecting tool 40 are substantially identical to one another or, alternatively, that the outer diameter of the shaft 44 of the connecting tool 38 is slightly larger than the inner diameter of each of the base ends 10a and 10b and the inner diameter of the connecting tool 40.

The description is continued with reference to Fig. 6 as well as Figs. 1 and 2. An elastic member 6 illustrated, which can be formed of an appropriate synthetic resin sheet of polyoxymethylene or a polyolefin resin such as polypropylene and polyethylene, or an appropriate metal sheet such as a spring steel sheet, includes a one-side elongated strip-like piece 46-1 and an other-side elongated strip-like piece 46-2 that are spaced apart from each other and extend in parallel with each other, and a connecting elongated strip-like piece 48 that connects an intermediate part of the one-side elongated strip-like piece 46-1 in the longitudinal direction with an intermediate part of the other-side elongated strip-like piece 46-2 in the longitudinal direction. At both ends of each of the one-side elongated strip-like piece 46-1 and the other-side elongated strip-like piece 46-2, projections 50 to be locked are formed that protrude on both sides in the width direction. In the central part in the width direction of each of the projections 50 to be locked, an additional projection 51 that protrudes in the longitudinal direction is formed. One end of the connecting elongated strip-like piece 48 extends in the width direction beyond the one-side elongated strip-like piece 46-1, while the other end of the connecting elongated strip-like piece 48 extends in the width direction beyond the other-side elongated strip-like piece 46-2. At the both ends of the connecting elongated strip-like piece 48, displacement prevention projections 52 are formed. The length between the displacement prevention projections 52 corresponds to the length between the restriction projections 36a provided at both edges of the free end 12a of the operation piece 4a and the length between the restriction projections 36b provided at both edges of the free end 12b of the operation piece 4b.

The elastic member 6 as described above is located between the free ends 12a and 12b of the paired operation pieces 4a and 4b. A more detailed description will be given with reference to Figs. 1 and 2. In a state where the displacement prevention projections 52 formed at the both ends of the connecting elongated strip-like piece 48 are directed to the side of the free ends of the paired operation pieces 4a and 4b (i.e., upward in Figs. 1 and 2), the projections 50 to be locked that are formed at the both ends of the one-side elongated strip-like piece 46-1 of the elastic member 6 are detachably received in the locking recessed portions 32a and 32b that are formed respectively on the inner surfaces of the free ends 12a and 12b of the paired operation pieces 4a and 4b on one side, and the additional projections 51 formed on the projections 50 to be locked are inserted in the holes 31a and 31b that are formed in the locking recessed portions 32a and 32b, respectively. In a like manner, the projections 50 to be locked that are formed at the both ends of the other-side elongated strip-like piece 46-2 are received in the locking recessed portions 32a and 32b that are formed respectively on the inner surfaces of the free ends 12a and 12b of the paired operation pieces 4a and 4b on the other side, and the additional projections 51 formed on the projections 50 to be locked are inserted in the holes 31a and 31b that are formed in the locking recessed portions 32a and 32b, respectively. Thus, the one-side elongated strip-like piece 46-1 extends between the paired operation pieces 4a and 4b on one side, while the other-side elongated strip-like piece 46-2 extends between the paired operation pieces 4a and 4b on the other side. The length of the elastic member 6 is set to be somewhat larger than the length between the free ends of the paired operation pieces 4a and 4b in a state where the free ends of the paired operation pieces 4a and 4b are most separated from each other (i.e., the state illustrated in Figs. 1 and 2). Thus, the elastic member 6 is incorporated into the paired operation pieces 4a and 4b forming a concave shape in such a manner that an intermediate part of the elastic member 6 in the longitudinal direction sinks toward the base ends 10a and 10b of the paired operation pieces 4a and 4b. Accordingly, the paired operation pieces 4a and 4b are maintained elastically in a state where the free ends are most separated from each other, i.e., a state where the projection 16b formed on the base end 10b of the operation piece 4b abuts one end of the cutout 16a formed in the base end 10a of the operation piece 4a, due to the elastic biasing action of the elastic member 6. In this state, the operation pieces 4a and 4b desirably form an angle θ in a range of approximately 20° to 90°. The rectangular recessed portions 32a and 32b formed on the both sides in the width direction of the inner surfaces of the free ends 12a and 12b of the paired operation pieces 4a and 4b, respectively, are located to correspond to the one-side elongated strip-like piece 46-1 and the other-side elongated strip-like piece 46-2 of the elastic member 6.

In the embodiment illustrated, the elastic member 6 is mounted on the paired operation pieces 4a and 4b detachably. If desired, the elastic member 6 can be fixed to a required position on the paired operation pieces 4a and 4b by an appropriate fixing means such as an adhesive agent. However, it is favorable that the elastic member 6 is mounted on the paired operation pieces 4a and 4b in such a manner that it can be detached sufficiently easily as in the embodiment illustrated. The reason follows. When the application auxiliary tool 2 is stored or transported, it can be made compact by separating the elastic member 6 from the paired operation pieces 4a and 4b, allowing the free ends of the paired operation pieces 4a and 4b to be closest to each other (i.e., allowing the projection 16b formed on the base end 10b of the operation piece 4b to abut the other end of the cutout 16a formed in the base end 10a of the operation piece 4a).

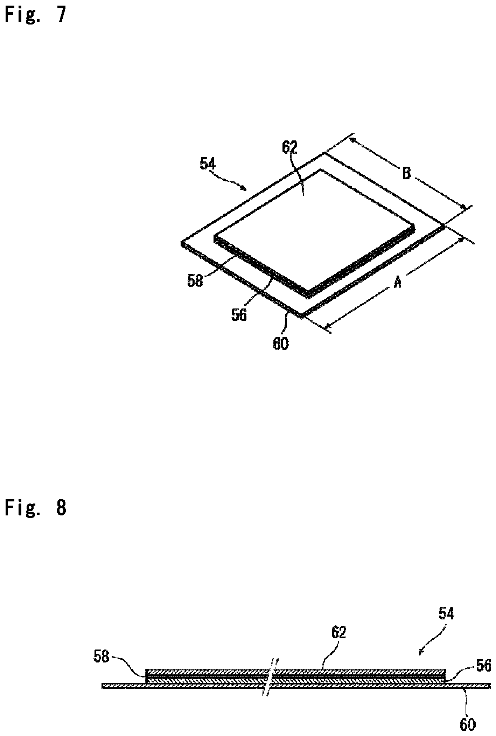

Figs. 7 and 8 illustrate a typical example of a protective patch. A protective patch as illustrated and denoted by reference numeral 54 includes an elastic sheet 56. An adhesive layer 58 is provided on one surface, i.e., the front surface, of the elastic sheet 56, and a protective sheet 60 is peelably laminated on the other surface, i.e., the rear surface. Further, the adhesive layer 58 is covered with release paper 62. Although the elastic sheet 56 of the protective patch 54 illustrated has a rectangular shape, it can take any other appropriate shape such as a shape in which substantially circular cutouts are formed on both sides of the central part in the longitudinal direction. In the present specification, a detailed description of the protective patch 54 itself will be omitted by referring to the description in aforementioned Patent Document 1.

It is desirable that the protective patch 54 is of such dimensions that it covers a teat orifice of a domestic animal and is applied to the sides of a teat to be held reliably at a required position on the teat. Since the size of teats of domestic animals varies among individuals, the dimensions of the protective patch 54 can be set as appropriate depending on the size of a teat of a domestic animal to be applied. Assuming that the dimensions of the protective patch 54 (in the case illustrated, where the protective sheet 60 is larger than any other component, the dimensions of the protective patch 54 are defined by the dimensions of the protective sheet 60) are A × B mm (Fig. 7), it is favorable that the length A corresponds to the extending length of the elastic member 6 of the application auxiliary tool 2, and the width B corresponds to the length of the connecting elongated strip-like piece 48 of the elastic member 6 (more specifically, the length between the displacement prevention projections 52 formed at the both ends of the connecting elongated strip-like piece 48). It is usually favorable that the length A is in a range of approximately 50 to 150 mm, and the width B is in a range of approximately 30 to 130 mm.

Next, a description will be given of a method of applying the protective patch to a teat orifice of a domestic animal using the application auxiliary tool 2 as described above.

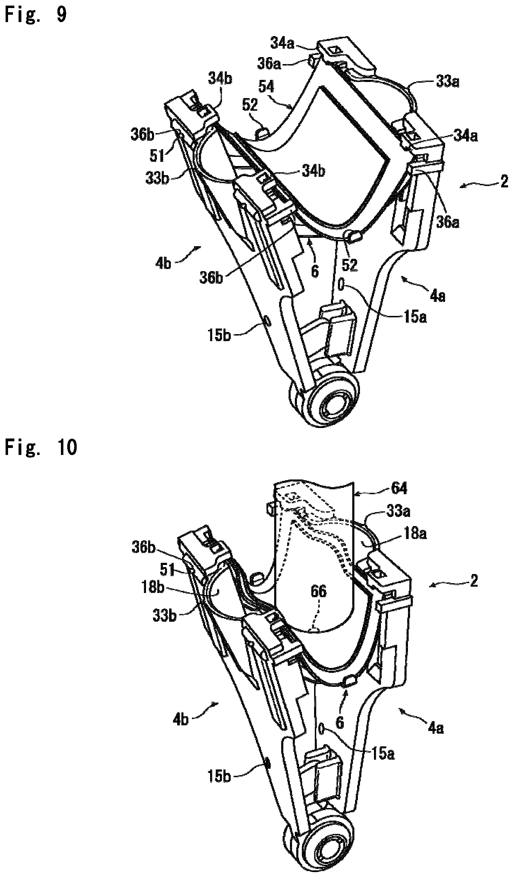

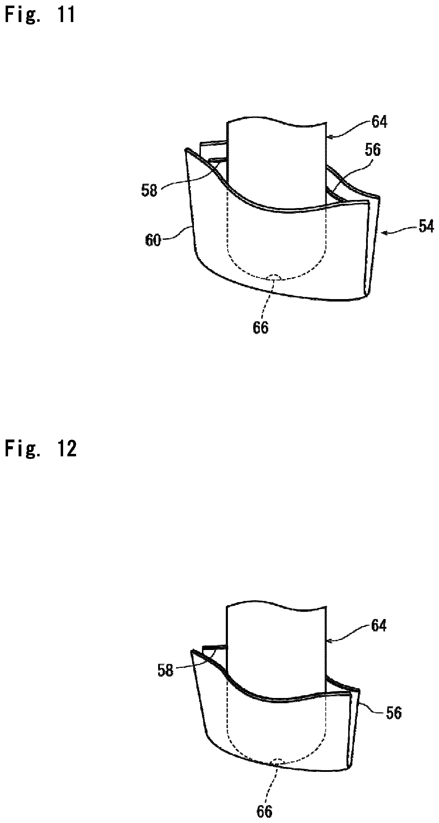

First, the application auxiliary tool 2 as described above is prepared (application auxiliary tool preparation step) . Then, as illustrated in Fig. 9, the protective patch 54 from which the release paper 62 has been peeled off to expose the adhesive layer 58 is placed on the elastic member 6 so as to extend substantially along the elastic member 6 (placement step). More specifically, the protective patch 54 is set so that one end of the protective sheet 60 abuts the restriction projections 34a provided in the free end 12a of the operation piece 4a, while the other end of the protective sheet 60 abuts the restriction projections 34b provided in the free end 12b of the operation piece 4b, and the entire protective patch 54 is maintained to sink downward forming a concave shape. The position of the protective patch 54 in the width direction is defined by the restriction projections 36a provided at the both edges of the free end 12a of the operation piece 4a, the restriction projections 36b provided at the both edges of the free end 12b of the operation piece 4b, and the displacement prevention projections 52 formed at the both ends of the connecting elongated strip-like piece 48 of the elastic member 6. Subsequently, as illustrated in Fig. 10, the protective patch 54 is pressed against an area including the tip of a teat 64, i.e., a teat orifice 66, of a domestic animal. Then, the operation pieces 4a and 4b are rotated in a direction in which the free ends get close to each other against the elastic biasing action of the elastic member 6. Thus, at least a part of the protective patch 54 is applied around the teat 64 of the domestic animal (application step). At this time, the teat 64 of the domestic animal is sandwiched between the recessed portion 18a formed in the free end 12a of the operation piece 4a and the recessed portion 18b formed in the free end 12b of the operation piece 4b. This operation is facilitated if the paired operation pieces 4a and 4b are formed of a transparent or semitransparent synthetic resin, and the ridges 33a and 33b are formed respectively to pass through the centers in the width direction of the outer surfaces of the free ends of the paired operation pieces 4a and 4b. That is, the application auxiliary tool 2 carrying the protective patch 54 can be located sufficiently easily at a required position on the teat 64 of the domestic animal. Afterwards, as illustrated in Fig. 11, the operation pieces 4a and 4b are rotated in a direction in which the free ends are separated from each other due to the elastic biasing action of the elastic member 6, and are separated from the protective patch 54 applied to the teat 64 of the domestic animal (application auxiliary tool separation step). Then, as illustrated in Fig. 12, the protective sheet 60 of the protective patch 54 applied to the teat 64 of the domestic animal is peeled off from the elastic sheet 56 (protective sheet peeling-off step). Finally, a user places his/her hand over the teat 64 of the domestic animal through the applied elastic sheet 56, thereby allowing the teat 64 to be covered with the elastic sheet 56 of the protective patch 54.

### Explanations of Letters or Numerals:

- 2:: application auxiliary tool
- 4a:: operation piece
- 4b:: operation piece
- 8a:: intermediate portion of operation piece
- 8b:: intermediate portion of operation piece
- 10a:: base end of operation piece
- 10b:: base end of operation piece
- 12a:: free end of operation piece
- 12b:: free end of operation piece
- 14a:: protruding wall (width direction displacement limiter)
- 14b:: protruding wall (width direction displacement limiter)
- 16a:: cutout (opening rotation angle limiter)
- 16b:: projection (opening rotation angle limiter)
- 18a:: recessed portion
- 18b:: recessed portion
- 31a:: hole
- 31b:: hole
- 32a:: locking recessed portion
- 32b:: locking recessed portion
- 34a:: restriction projection
- 34b:: restriction projection
- 36a:: restriction projection
- 36b:: restriction projection
- 46-1:: one-side elongated strip-like piece
- 46-2:: other-side elongated strip-like piece
- 48:: connecting elongated strip-like portion of elastic member
- 50:: projection to be locked
- 51:: additional projection
- 52:: displacement prevention projection
- 54:: protective patch

- 56:: elastic sheet of protective patch
- 58:: adhesive layer
- 60:: protective sheet
- 62:: release paper
- 64:: teat of domestic animal

## Claims

1. An application auxiliary tool for applying a protective patch to a teat of a domestic animal so as to protect a teat orifice of the domestic animal, comprising:
paired operation pieces that are rotatably connected to each other at their base ends; and an elastic member located between free ends of the paired operation pieces.

2. The application auxiliary tool according to claim 1, wherein each of the paired operation pieces includes an opening rotation angle limiter that limits an opening rotation angle between the paired operation pieces to a predetermined angle, and the elastic member is maintained to form a concave shape in such a manner that its intermediate part sinks toward the base ends of the paired operation pieces.

3. The application auxiliary tool according to claim 1 or 2, wherein one end of the elastic member is detachably connected to one of the free ends of the paired operation pieces, while the other end of the elastic member is detachably connected to the other of the free ends of the paired operation pieces.

4. The application auxiliary tool according to any one of claims 1 to 3, wherein each of the free ends of the paired operation pieces has a predetermined width that corresponds to a width of the protective patch, and the elastic member includes: a one-side elongated strip-like piece that extends between the paired operation pieces on one side in a width direction; and an other-side elongated strip-like piece that extends between the paired operation pieces on the other side in the width direction.

5. The application auxiliary tool according to claim 4, wherein the elastic member includes a connecting elongated strip-like piece that is formed integrally to connect an intermediate part of the one-side elongated strip-like piece in a longitudinal direction with an intermediate part of the other-side elongated strip-like piece in the longitudinal direction.

6. The application auxiliary tool according to claim 5, wherein one end of the connecting elongated strip-like piece of the elastic member extends beyond the one-side elongated strip-like piece in the width direction, while the other end extends beyond the other-side elongated strip-like piece in the width direction, and at the one end and the other end of the connecting elongated strip-like piece, displacement prevention projections are formed to prevent the protective patch to be placed on the elastic member from being displaced in the width direction.

7. The application auxiliary tool according to any one of claims 4 to 6, wherein at both ends of the one-side elongated strip-like piece and both ends of the other-side elongated strip-like piece of the elastic member, projections to be locked are formed to protrude on both sides in the width direction, and in the free ends of the paired operation pieces, locking recessed portions are formed to detachably receive the respective projections to be locked.

8. The application auxiliary tool according to claim 7, wherein in a central part of each of the projections to be locked in the width direction, an additional projection is formed to protrude in the longitudinal direction, and in a central part of each of the locking recessed portions in the width direction, a hole is formed to allow the additional projection to be inserted therein.

9. The application auxiliary tool according to any one of claims 1 to 8, wherein each of the paired operation pieces includes a width direction limiter that prevents the paired operation pieces from being displaced from each other in the width direction.

10. The application auxiliary tool according to any one of claims 1 to 9, wherein in a central part in the width direction of each of the free ends of the paired operation pieces, a recessed portion with an inverted truncated cone shape is formed to extend in the longitudinal direction.

11. The application auxiliary tool according to any one of claims 1 to 10, wherein on an outer surface of each of the free ends of the paired operation pieces, a ridge is provided to extend in the longitudinal direction through a center in the width direction.

12. The application auxiliary tool according to any one of claims 1 to 11, wherein on both sides in the width direction of an inner surface of each of the free ends of the paired operation pieces, restriction projections are provided to prevent the protective patch to be placed on the elastic member from being displaced in the width direction and protruding from each of the free ends.

13. The application auxiliary tool according to any one of claims 1 to 12, wherein each of the paired operation pieces is formed of a synthetic resin.

14. The application auxiliary tool according to claim 13, wherein each of the paired operation pieces is transparent or semitransparent.

15. The application auxiliary tool according to any one of claims 1 to 14, wherein the elastic member is formed of a synthetic resin sheet.

16. A protective patch application method of applying a protective patch for protecting a teat orifice of a domestic animal to a teat of the domestic animal, the protective patch including: an elastic sheet; an adhesive layer laminated on one side of the elastic sheet; and a protective sheet peelably laminated on the other side of the elastic sheet, the method comprising:
preparing the application auxiliary tool according to any one of claims 1 to 15;
placing the protective patch on the elastic member of the application auxiliary tool with the adhesive layer directed upward;
applying at least a part of the protective patch around the teat of the domestic animal by pressing a central part of the protective patch placed on the elastic member against a tip of the teat of the domestic animal and rotating the respective operation pieces in a direction in which the free ends get close to each other against an elastic biasing action of the elastic member;
separating the application auxiliary tool from the protective patch applied to the teat of the domestic animal while rotating the respective operation pieces in a direction in which the free ends are separated from each other due to the elastic biasing action of the elastic member; and
peeling off the protective sheet of the protective patch applied to the teat of the domestic animal from the elastic sheet.
